# EUROPEAN PATENT APPLICATION

(11) **EP 3 121 761 A1**
(43) Date of publication of application: **25.01.2017**
(21) Application number: 16179560.4
(22) Date of filing: 14.07.2016
(51) Int. Cl.: G06K 9/00, G08G 1/16, H04L 29/08

(54) **A SYSTEM AND METHOD FOR VERIFYING ROAD POSITION INFORMATION FOR A MOTOR VEHICLE**

(30) Priority: 20.07.2015 US 201562194359 P; 30.06.2016 US 201615197928
(71) Applicant: Dura Operating, LLC, Auburn Hills, MI 48326 (US)
(72) Inventor: Gignac, Donald Raymond, Auburn Hills, MI Michigan 48326 (US); Thompson, Aaron Evans, Auburn Hills, MI Michigan 48326 (US); Siddiqui, Danish Uzair, Auburn Hills, MI Michigan 48326 (US); Patil, Rajashekhar, Auburn Hills, MI Michigan 48326 (US); Thomas, Gordon M., Auburn Hills, MI Michigan 48326 (US)
(74) Representative: Manitz, Finsterwald & Partner GbR

(57) **Abstract**

A system for verifying host vehicle road position information includes a first camera, a second camera, and a controller in communication with the first and second cameras. The controller has memory and a processor for storing and executing control logic. The control logic includes a control logic for collecting first camera data from the first camera, for generating a first lane marking estimate from the first camera data, for determining a first lane distance estimate from the first lane marking estimate, for collecting second camera data from the second camera, for generating a second estimate of lane markings from the second camera data, for determining a second lane distance estimate from the second lane marking estimate, for correlating and combining the first and second lane distance estimates to generate a combined lane distance estimate, and for calibrating the first camera to the combined lane distance estimate.

## Description

### CROSS REFERENCE TO RELATED APPLICATIONS

The present application claims the benefit of U.S. Provisional Patent application number 62/194,359, filed on July 20, 2015, the subject matter of which is incorporated herein by reference.

### FIELD

The invention relates generally to a driver assistance system for motor vehicles, and more particularly to a driver assistance system having a system and method for verifying road position information for a motor vehicle.

### BACKGROUND

The statements in this section merely provide background information related to the present disclosure and may or may not constitute prior art.

Motor vehicle sensing systems are known which can identify to a host vehicle other proximate motor vehicles and warn an operator of the host vehicle of the other vehicle's movements which may intersect the driving path of the host vehicle. Other motor vehicle position sensing systems are known which can utilize the data received from a camera to identify to a host vehicle the host vehicle position on a road. Yet other motor vehicle sensing systems are known which can utilize the data received from the above noted sensing systems and institute changes such as to reduce a host vehicle driving speed, apply brakes, provide audio and visual warning signals and the like.

However, camera based motor vehicle position sensing systems may have a positional error and cannot, on their own, accurately map the road position of the host vehicle. Therefore, there is a need in the art for a system and method for accurately verifying road position information for motor vehicles.

### SUMMARY

In one aspect of the present invention, a system for verifying host vehicle road position information includes a first camera and a second camera. The system further includes a controller in communication with the first camera and the second camera, the controller having memory for storing control logic and a processor configured to execute the control logic. The control logic further includes a first control logic for collecting first camera data from the first camera. The control logic further includes a second control logic for generating a first estimate of lane markings from the first camera data. The control logic further includes a third control logic for determining a first lane distance estimate from the first estimate of lane markings. The control logic further includes a fourth control logic for collecting second camera data from the second camera. The control logic further includes a fifth control logic for generating a second estimate of lane markings from the second camera data. The control logic further includes a sixth control logic for determining a second lane distance estimate from the second estimate of lane markings. The control logic further includes a seventh control logic for correlating and combining the first lane distance estimate with the second lane distance estimate to generate a combined lane distance estimate. The control logic further includes an eighth control logic for calibrating the first camera to the combined lane distance estimate.

In another embodiment of the present invention, the first camera is a front camera mounted to a front surface of the host vehicle and having a forward-facing field of view, and the second camera is a left camera mounted to a left side of the host vehicle and having a left-facing field of view.

In yet another embodiment of the present invention, the first estimate of lane markings further includes a measurement of a first optical intensity of a road surface relative to a predefined scan line intensity.

In yet another embodiment of the present invention, the second estimate of lane markings further includes a measurement of a second optical intensity of a road surface relative to a predefined scan line intensity.

In yet another embodiment of the present invention, the first estimate of lane markings and the second estimate of lane markings further includes a determination of whether a lane marking is present based on the first and second optical intensities.

In yet another embodiment of the present invention, the controller further includes a ninth logic for determining a host vehicle position relative to the combined estimate of lane markings.

In yet another embodiment of the present invention, the host vehicle position includes a distance from a surface of the host vehicle to an edge of a lane marking of the combined estimate of lane markings.

In yet another embodiment of the present invention, the controller further includes a tenth logic for communicating to a human-machine interface of the host vehicle a lane departure warning when the host vehicle crosses the lane marking of the combined estimate of lane markings.

In yet another embodiment of the present invention, a method for calibrating a host vehicle front camera includes collecting first camera data from a first camera. The method further includes generating a first estimate of lane markings from the first camera data. The method further includes determining a first lane distance estimate from the first estimate of lane markings. The method further includes collecting second camera data from a second camera. The method further includes generating a second estimate of lane markings from the second camera data. The method further includes determining a second lane distance estimate from the second estimate of lane markings. The method further includes correlating and combining the first lane distance estimate with the second lane distance estimate to generate a combined lane distance estimate, and calibrating the first camera to the combined lane distance estimate.

In yet another embodiment of the present invention, the collecting first and second camera data further includes collecting camera data from a front camera mounted to a front surface of the host vehicle and having a forward-facing field of view, and a left camera mounted to a left side of the host vehicle and having a left-facing field of view.

In yet another embodiment of the present invention, the generating a first estimate of lane markings further includes measuring a first optical intensity of a road surface relative to a predefined threshold optical intensity.

In yet another embodiment of the present invention, the generating a second estimate of lane markings further includes measuring a second optical intensity of a road surface relative to the predefined threshold optical intensity.

In yet another embodiment of the present invention, the correlating the first camera data with the second camera data further includes transforming a second camera data coordinate system to align with a first camera data coordinate system.

In yet another embodiment of the present invention, the calibrating the front camera further includes comparing the first estimate of lane markings to the combined estimate of lane markings and transforming the front camera data coordinate system to align with the combined estimate of lane markings.

In yet another embodiment of the present invention, the method further includes determining a host vehicle position within the combined estimate of lane markings and communicating to a host vehicle human-machine-interface (HMI) the host vehicle position relative to the combined estimate of lane markings.

In yet another embodiment of the present invention, the host vehicle position comprises a distance from a reference position on the host vehicle to an edge of a lane marking of the combined estimate of lane markings.

In yet another embodiment of the present invention, a method for calibrating a host vehicle front camera to a road surface includes scanning with a front camera a road segment in a path of travel of the host vehicle, and generating a front camera image. The method further includes scanning with a plurality of side cameras a road segment adjacent to the host vehicle, and generating a side camera image. The method further includes processing the front camera image using a controller and determining a front plurality of lane markings. The method further includes processing the side camera image and determining a side plurality of lane markings. The method further includes correlating the front plurality of lane markings with the side plurality of lane markings and generating a combined lane marking position estimate, and calibrating the front camera to the combined lane marking position estimate.

In yet another embodiment of the present invention, the processing the front camera image and processing the side camera image further includes measuring a front camera image intensity profile and measuring a side camera image intensity profile.

In yet another embodiment of the present invention, the processing the front camera image and the side camera image further includes comparing each of the front camera image intensity profile and the side camera image intensity profile to a predetermined image intensity profile, generating a lane map from the front and side camera image intensity profiles, and assessing the similarity of each of the front and side camera image intensity profiles to a predefined plurality of lane markings intensity profiles stored within a memory of the controller.

In yet another embodiment of the present invention, the method further includes determining a host vehicle position relative to the combined lane marking position estimate wherein the host vehicle position includes a distance from a reference position on the host vehicle to an edge of a lane marking of the combined estimate of lane markings, and transmitting via a human-machine-interface (HMI) a notification of the host vehicle position to a host vehicle operator.

### BRIEF DESCRIPTION OF THE DRAWINGS

The drawings described herein are for illustration purposes only and are not intended to limit the scope of the present disclosure in any way. In the drawings
FIG. 1 is a schematic diagram of an exemplary motor vehicle on a road segment, the motor vehicle having a system for calibrating a camera;
FIG. 2 is a pictorial diagram of the road segment as generated by the camera of the motor vehicle; and
FIG. 3 is a system diagram illustrating a method of calibrating the camera.

### DETAILED DESCRIPTION

The following description is merely exemplary in nature and is not intended to limit the present disclosure, application, or uses.

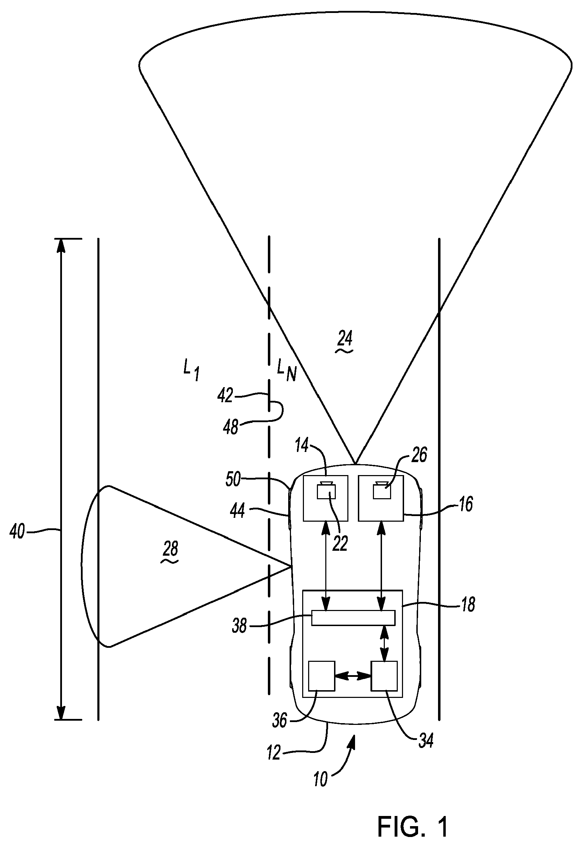

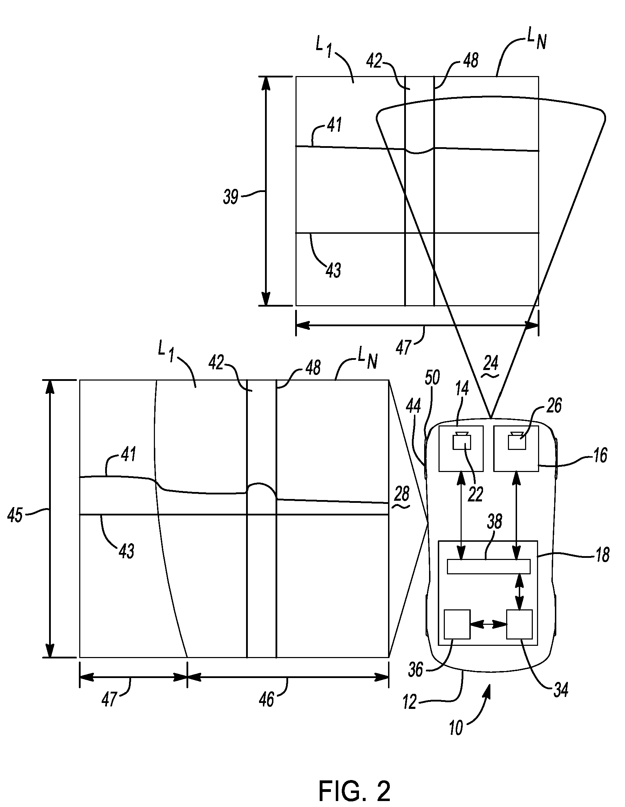

With reference to FIGS. 1 and 2, a system and method for verifying road position information for a motor vehicle is generally indicated by reference to lane position system 10. The system 10 is used with a host vehicle 12 having a first camera system 14, a second camera system 16, and a controller 18 in communication with the first and second camera systems 14, 16.

The first camera system 14 includes one or more first optical sensors or cameras 22. The first camera 22 is operable to collect visual information in a first predefined field of view 24 from the host vehicle 12. In the example provided, the first camera 22 is illustrated as a front facing camera with the first field of view 24 projected in a forward arc relative to the host vehicle 12. However, it should be appreciated that the first camera sub-system 14 may include a plurality of cameras, including front view cameras, side-view cameras, surround view cameras, side-view mirror cameras, rear facing cameras, etc. Visual data from the first camera 22 is communicated to the controller 18.

The second camera system 16 includes one or more second optical sensors or cameras 26. In the example provided, the second camera 26 is a left-facing camera that may be part of a surround-view camera system. The second camera 26 has a second field of view 28 projected in a left-facing arc relative to the host vehicle 12. However, it should be appreciated that the second camera system 16 may include any number and type of cameras, including surround cameras, side-view mirror cameras, rear facing cameras, forward cameras, etc. Visual data from the second camera 26 is communicated to the controller 18.

The controller 18 is a non-generalized, electronic control device having a preprogrammed digital computer or processor 34, memory or non-transitory computer readable medium 36 used to store data such as control logic, instructions, image data, lookup tables, etc., and a plurality of input/output peripherals or ports 38. The processor 34 is configured to execute the control logic or instructions. The controller 18 may have additional processors or additional integrated circuits in communication with the processor 34, such as perception logic circuits for analyzing the visual data or dedicated vehicle-to-vehicle (V2V) circuits. Alternatively, the functions of the controller 18 may be distributed across the first camera sub-system 14 and/or the second camera system 16.

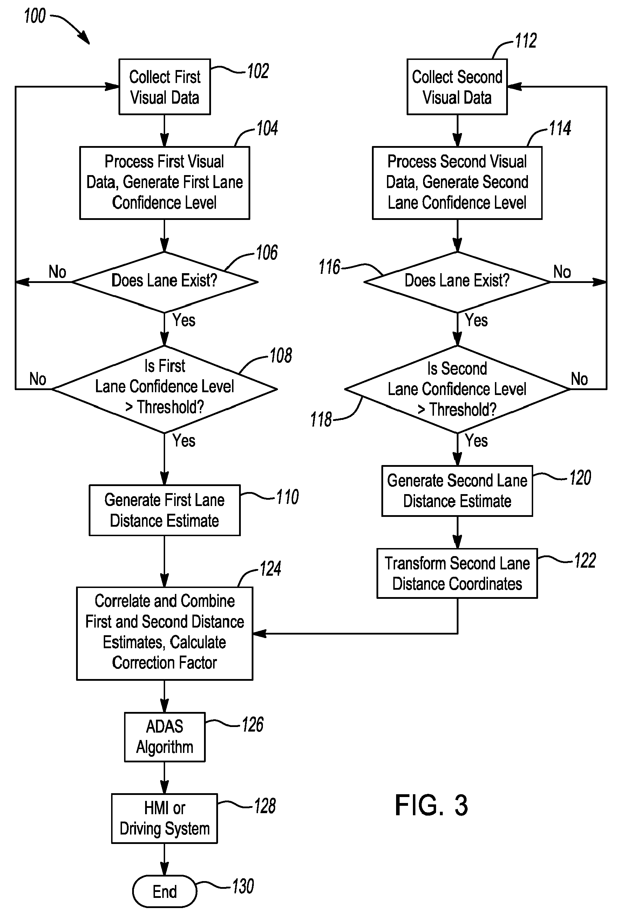

Turning now to FIG. 3, and with continued reference to FIGS. 1 and 2, a method for generating and communicating camera and lane position information is generally indicated by reference number 100. For illustrative purposes, the method 100 will be described with the host vehicle 12 operating on an exemplary road segment 40, shown in FIGS. 1 and 2. The road segment 40 has lanes L₁ to Lₙ. It should be appreciated that the road segment 40 may have as few as one lane without departing from the scope of the present disclosure. The lanes L₁ to Lₙ are defined by lane markings 42. The lane markings 42 may be reflective paint, reflectors, traffic cones or barrels, grooves, etc. Additionally, the lane markings 16 may be solid lines, dashed lines, dashed and solid lines, or any other type of lane marking 36. The road segment 40 is illustrated as being straight but may have any shape and have any topography without departing from the scope of the present disclosure.

The method 100 begins at block 102 where the first camera 22 continuously captures first visual data of a first portion 39 of the road segment 40 and sends the first visual data to the controller 18. The first visual data may be in a forward arc or a partial surround view relative to the host vehicle 12, depending on the number and type of first cameras 22 mounted on the host vehicle 12. In the present example, the first visual data includes the lane markings 42 for the portion of the road segment 40 within the field of view 24 of the first camera 22. The first visual data may also include a shadow 46 of the host vehicle 12, and/or of one or more remote vehicles, a sunlit area 47, road reflectors, crosswalks, optical reflections from remote vehicles, etc., without departing from the scope or intent of the disclosure.

At block 104 the controller 18 processes the first visual data for any possible lane markings 42 identifiable within the first visual data. In one aspect, to detect the presence of lane markings 42 within the visual data, the controller 18 compares an optical intensity profile 41 of the first visual data to a library of known optical intensity profiles 43 for known lane markings 42. The known optical intensity profiles 43 may include information about lane marking width, periodicity, direction relative to the host vehicle 12, color, curvature, etc. Additionally, the library includes reference information corresponding to road markings that are not lane markings 42. In one aspect, the reference information includes optical intensity profiles corresponding to pedestrian crosswalks, parking space markings, roadwork markings, etc.

Additionally, at block 104 a first lane marking confidence level is generated. To generate the first lane marking confidence level, the controller 18 determines a level of similarity between the lane markings 42 detected within the first visual data to the reference lane markings 42 within the library. For lane markings 42 with a high degree of similarity to the reference lane markings 42 within the library, a high first lane marking confidence level is assigned. For lane markings 42 with a low degree of similarity to the reference lane markings 42, a low first lane marking confidence level is assigned. It should be appreciated that the first lane marking confidence level may be based on a continuum. For example, a solid line lane marking 42 within the first visual data that has been heavily damaged by erosion, or that has been partially covered by skid-marks from tires may approximate the periodicity of the dashed paint of a dashed lane marking 42. In this example, the base lane classification may be assigned a low first lane marking confidence level. However, with further reference to the example, because the lane markings 42 are continuously captured by the first visual data from the first camera 22, as the host vehicle 12 travels along the road segment 40, the damaged lane marking 42 may exhibit less damage at some points along its length than at other points. For the less damaged sections of the lane marking 42 of the example, the controller 18 may assign a high first lane marking confidence level, indicating a high probability that the lane marking 42 is a solid line.

At block 106 if the controller 18 does not detect a lane marking 42, the method returns to block 102 and collects first visual data again. However, if a lane marking 42 is detected, the method proceeds to block 108 where the optical profile of the first visual data is compared to a predetermined set of first calibration criteria for the first camera 22. In an aspect, the first calibration criteria includes a predetermined optical intensity range, and a predetermined distance from the host vehicle 12, etc. If the first calibration criteria have not been met, the method returns to block 102 and begins again. However, when the first calibration criteria have been met, the method proceeds to block 110.

At block 110, the controller 18 continuously generates a first lane distance estimate from the first visual data processed at blocks 104-108. The first lane distance estimate is based on a position of the lane markings 42 of the lanes L₁ to Lₙ identified by the controller 18 during the processing of the first visual data relative to a reference position 44 on the host vehicle 12. In one aspect, the first lane distance estimate is a measurement of the distance from the reference position 44 of the host vehicle 12 to an edge of the lane markings 48, wherein the reference position 44 is the front tire 50 of the host vehicle 12. To determine a first estimated distance of the lane markings 42 from the reference position 44 on the host vehicle 12, the controller extrapolates an extent of the lane markings 42 from the first visual data. That is, because the first visual data from the first camera 22 is limited to the predefined area 24 surrounding the host vehicle 12, the lane markings 42 extend beyond a field of view of the first camera 22. Thus, in order to accurately determine a position of the lane markings 42, the controller 18 extrapolates from the position of the host vehicle 12 on the road segment 40, and from the first visual data, a first predicted position of the lane markings 42. In one aspect, in addition to using the first visual data, the controller 18 compiles the position of the host vehicle 12 based on a global position system (GPS) information, an angular position of a steering wheel of the host vehicle 12, a speed of the host vehicle 12, etc. to extrapolate the predicted position of the lane markings 42 relative to the reference position 44 on the host vehicle 12. It should be appreciated that while the reference position 44 of the host vehicle 12 is discussed with reference to a front tire 50, the reference position 44 may be any predetermined reference position 44 on the host vehicle. Additionally, it should be appreciated that while the first lane distance estimate is discussed with reference to an edge of a lane marking 48, the first lane distance measurement may reference a center line, a right or left side or any other predetermined portion of a lane marking 48.

At block 112 the second camera 26 continuously captures second visual data of the road segment 40 and sends the second visual data to the controller 18. The second visual data may be in a side arc or a partial surround view relative to the host vehicle 12, depending on the number and type of second cameras 26 mounted on the host vehicle 12. In the example of FIG. 2, the second visual data includes the lane markings 42 for the portion 45 of the road segment 40 within the field of view 28 of the second camera 26. The second visual data of the present example also includes a shadow 46 of the host vehicle 12 and a sunlit area 47. The second visual data of the present example may also include road reflectors, crosswalks, optical reflections and shadows from remote vehicles, etc., without departing from the scope or intent of the disclosure.

At block 114 the controller 18 processes the second visual data for any possible lane markings 42 identifiable within the second visual data. In one aspect, to detect the presence of lane markings 42 within the second visual data, the controller 18 compares an optical intensity profile 41 of the second visual data to a library of known optical intensity profiles 43 for known lane markings 42. The known optical intensity profiles 43 include information about lane marking width, periodicity, direction relative to the host vehicle 12, color, curvature, etc. Additionally, the library includes reference information corresponding to road markings that are not lane markings 42. In one aspect, the reference information includes optical intensity profiles corresponding to pedestrian crosswalks, parking space markings, roadwork markings, reflections, shadows, etc.

Additionally, at block 114 a second lane marking confidence level is generated. To generate the second lane marking confidence level, the controller 18 determines a level of similarity between the lane markings 42 detected within the second visual data to the reference lane markings 42 within the library. For lane markings 42 with a high degree of similarity to the reference lane markings 42 within the library, a high second lane marking confidence level is assigned. For lane markings 42 with a low degree of similarity to the reference lane markings 42, a low second lane marking confidence level is assigned. It should be appreciated that the second lane marking confidence level may be based on a continuum. For example, a solid line lane marking 42 within the second visual data that has been heavily damaged by erosion, or that has been partially covered by skid-marks from tires may approximate the periodicity of the dashed paint of a dashed lane marking 42. In this example, the base lane classification may be assigned a low second lane marking confidence level. However, with further reference to the example, because the lane markings 42 are continuously captured by the second visual data from the second camera 26, as the host vehicle 12 travels along the road segment 40, the damaged lane marking 42 may exhibit less damage at some points along its length than at other points. For the less damaged sections of the lane marking 42 of the example, the controller 18 may assign a high second lane marking confidence level, indicating a high probability that the lane marking 42 is a solid line.

At block 116 if the controller 18 does not detect a lane marking 42 within the second visual data, the method returns to block 112 and collects second visual data again. However, if a lane marking 42 is detected, the method proceeds to block 118 where the optical profile of the second visual data is compared to a predetermined set of second calibration criteria for the first camera 22. In an aspect, the second calibration criteria includes a predetermined optical intensity range, and a predetermined distance from the host vehicle 12, etc. If the second calibration criteria have not been met, the method returns to block 102 and begins again. However, when the second calibration criteria have been met, the method proceeds to block 120 where a second lane distance estimate is generated.

At block 120, the controller continuously generates a second lane distance estimate from the second visual data processed at block 114. The second lane distance estimate is based on a position of the lane markings 42 of the lanes L₁ to Lₙ identified by the controller 18 during the processing of the second visual data relative to a reference position 44 on the host vehicle 12. In one aspect, the second lane distance estimate is a measurement of the distance from the reference position 44 of the host vehicle 12 to an edge of the lane markings 48, wherein the reference position 44 is the front tire 50 of the host vehicle 12. To determine a second estimated distance of the lane markings 42 from the reference position 44 on the host vehicle 12, the controller extrapolates an extent of the lane markings 42 from the second visual data. That is, because the second visual data from the second camera 26 is limited to the predefined area 28 surrounding the host vehicle 12, the lane markings 42 extend beyond a field of view of the second camera 26. Thus, in order to accurately determine a position of the lane markings 42 relative to the host vehicle 44, the controller 18 extrapolates from the position of the host vehicle 12 on the road segment 40, and from the second visual data, a second predicted position of the lane markings 42. In one aspect, in addition to using the first visual data the controller 18 compiles the position of the host vehicle 12 based on a global position system (GPS) information, an angular position of a steering wheel of the host vehicle 12, a speed of the host vehicle 12, etc. to extrapolate the predicted position of the lane markings 42 relative to the reference position 44 on the host vehicle 12. It should be appreciated that while the reference position 44 of the host vehicle 12 is discussed with reference to a front tire 50, the reference position 44 may be any predetermined reference position 44 on the host vehicle. Additionally, it should be appreciated that while the second lane distance estimate is discussed with reference to an edge of a lane marking 48, the second lane distance measurement may reference a center line, a right or left side or any other predetermined portion of a lane marking 48.

At block 122, the controller 18 correlates the first lane distance estimate and the second lane distance. The first lane distance estimate is based on data acquired from the first camera 22 pointing in a first direction and collecting data from the first field of view 24 in a first coordinate system. The second distance estimate is based on data acquired from the second camera 26 pointing in a second direction and collecting data from the second field of view 28 in a second coordinate system. In an aspect, the first and second coordinate systems are dissimilar. In order to correlate and combine the lane markings 42 of the first and second visual data, the controller 18 mathematically transforms the second visual data to align with the first visual data. That is, the controller 18 applies a mathematical transformation to the second coordinate system of the second visual data to place the second visual data into the first coordinate system. In an example, the controller 18 may rotate or translate the second visual data coordinate system. In a further example, in calculating the coordinate transformation, the controller 18 may combine vehicle data such as vehicle speed, GPS location and direction of travel, road curvature and topography information, etc. with the second visual data coordinate system.

At block 124, once the first lane distance estimate and the second lane distance estimate are in the same visual data coordinate system, the controller 18 combines the first and second lane distance estimates to generate a combined lane distance estimate. By combining the vehicle data with the second visual data coordinate system, the controller 18 refines the second visual data coordinate system to more accurately reflect a host vehicle 12 direction of travel and the second lane distance estimate. In an aspect, by refining the second visual data coordinate system, an amount of error in the second visual data is reduced. Additionally, at block 124, once the first and second visual data are in the same mathematical coordinate system, the lane markings 42 of the first and second visual data are compared to one another and a mathematical calibration factor is generated by the controller 18. In one aspect, the calibration factor includes an estimate of a first camera 22 error, and a correction therefor. For example, a first camera 22 may have a directional error level. The directional error level may stem from any number of factors such as manufacturing tolerances, assembly tolerances, host vehicle 12 collisions with objects or other vehicles, host vehicle 12 suspension height tolerances, etc. In order to correct for the directional error and more accurately determine the first lane distance estimate, the calibration factor is applied. It should be appreciated that though the preceding discussion references applying the calibration factor to a directional error of the first camera 22, the calibration factor may be applied to a directional error of any camera on the host vehicle 22 including the first camera 22, second camera 26, etc. without departing from the scope or intent of the disclosure.

At block 126, the controller 18 monitors the combined lane distance estimate. In one aspect, once the mathematical calibration factor has been applied to the first camera 22, and a combined lane distance estimate has been verified against the calibrated first camera 22 visual data the controller 18 applies an Advanced Driver Assistance System (ADAS) algorithm. In an aspect, the ADAS algorithm is a lane departure warning (LDW) algorithm. The LDW algorithm compares the combined lane distance estimate to a threshold lane distance value and selectively generates an output to a human-machine interface (HMI) and/or to one or more of the driving systems of the host vehicle 12 at block 128. It should be understood that while the ADAS algorithm is discussed as relating to an LDW algorithm, an HMI, and/or one or more driving systems, the ADAS algorithm may include any ADAS algorithm including active lane assist, active parking assistance, object avoidance, etc., and that the algorithm may engage any driving system including host vehicle steering systems, host vehicle braking systems, host vehicle lighting systems, etc. At block 130 the method ends and the system 10 begins collecting visual data from the first camera 22 and the second camera 26 again.

By collecting and transforming lane information that is detected by imaging sensors, the system 10 allows for the accurate mapping of the host vehicle 12 within lanes of a road segment 40. The lane information may then be used by advanced driver assistance systems to provide increased levels of autonomous driving.

The description of the invention is merely exemplary in nature and variations that do not depart from the gist of the invention are intended to be within the scope of the invention. Such variations are not to be regarded as a departure from the spirit and scope of the invention.

## Claims

1. A system for verifying host vehicle road position information, the system comprising:
a first camera;
a second camera;
a controller in communication with the first camera and the second camera, the controller having memory for storing control logic and a processor configured to execute the control logic, the control logic including a first control logic for collecting first camera data from the first camera, second control logic for generating a first estimate of lane markings from the first camera data, a third control logic for determining a first lane distance estimate from the first estimate of lane markings, a fourth control logic for collecting second camera data from the second camera, a fifth control logic for generating a second estimate of lane markings from the second camera data, a sixth control logic for determining a second lane distance estimate from the second estimate of lane markings, a seventh control logic for correlating and combining the first lane distance estimate with the second lane distance estimate to generate a combined lane distance estimate, and an eighth control logic for calibrating the first camera to the combined lane distance estimate.

2. The system of claim 1 wherein the first camera is a front camera mounted to a front surface of the host vehicle and having a forward-facing field of view, and the second camera is a left camera mounted to a left side of the host vehicle and having a left-facing field of view.

3. The system of claim 1 wherein the first estimate of lane markings further comprises a measurement of a first optical intensity of a road surface relative to a predefined scan line intensity.

4. The system of claim 3 wherein the second estimate of lane markings further comprises a measurement of a second optical intensity of a road surface relative to a predefined scan line intensity.

5. The system of claim 4 wherein the first estimate of lane markings and the second estimate of lane markings further comprises a determination of whether a lane marking is present based on the first and second optical intensities.

6. The system of claim 1 wherein the controller further comprises a ninth logic for determining a host vehicle position relative to the combined estimate of lane markings.

7. The system of claim 6 wherein the host vehicle position comprises a distance from a surface of the host vehicle to an edge of a lane marking of the combined estimate of lane markings.

8. The system of claim 7 wherein the controller further comprises a tenth logic for communicating to a human-machine interface of the host vehicle a lane departure warning when the host vehicle crosses the lane marking of the combined estimate of lane markings.

9. A method for calibrating a host vehicle front camera, the method comprising:
collecting first camera data from a first camera;
generating a first estimate of lane markings from the first camera data;
determining a first lane distance estimate from the first estimate of lane markings;
collecting second camera data from a second camera;
generating a second estimate of lane markings from the second camera data;
determining a second lane distance estimate from the second estimate of lane markings;
correlating and combining the first lane distance estimate with the second lane distance estimate to generate a combined lane distance estimate; and
calibrating the first camera to the combined lane distance estimate.

10. The method of claim 9 wherein the collecting first and second camera data further comprises collecting camera data from a front camera mounted to a front surface of the host vehicle and having a forward-facing field of view and a left camera mounted to a left side of the host vehicle and having a left-facing field of view.

11. The method of claim 9 wherein the generating a first estimate of lane markings further comprises measuring a first optical intensity of a road surface relative to a predefined threshold optical intensity.

12. The method of claim 11 wherein the generating a second estimate of lane markings further comprises measuring a second optical intensity of a road surface relative to the predefined threshold optical intensity.

13. The method of claim 12 wherein the correlating the first camera data with the second camera data further comprises transforming a second camera data coordinate system to align with a first camera data coordinate system.

14. The method of claim 13 wherein the calibrating the front camera further comprises comparing the first estimate of lane markings to the combined estimate of lane markings and transforming the front camera data coordinate system to align with the combined estimate of lane markings.

15. The method of claim 14 further comprising determining a host vehicle position within the combined estimate of lane markings and communicating to a host vehicle human-machine-interface (HMI) the host vehicle position relative to the combined estimate of lane markings.
